# EUROPÄISCHE PATENTSCHRIFT

(11) **EP 1 277 948 B1**
(45) Veröffentlichungstag und Bekanntmachung des Hinweises auf die Patenterteilung: **02.11.2005**
(21) Anmeldenummer: 02014580.1
(22) Anmeldetag: 02.07.2002
(51) Int. Cl.: F02M 37/22

(54) **Kraftstofffilter**
Fuel filter
Filtre à carburant

(30) Priorität: 20.07.2001 DE 10135592
(43) Veröffentlichungstag der Anmeldung: 22.01.2003
(73) Patentinhaber: ROBERT BOSCH GMBH, 70442 Stuttgart (DE)
(72) Erfinder: Sancho de Castro, Manuel, 37007 Salamance (ES); Granda, Miguel, 28022 Madrid (ES)

(56) Entgegenhaltungen:
- DE-A- 19 804 549
- GB-A- 2 129 329
- US-A- 5 855 772

## Beschreibung

### Stand der Technik

Die Erfindung geht aus von einem Kraftstofffilter, insbesondere für Dieselkraftstoff, nach der im Oberbegriff des Anspruchs 1 näher angegebenen Gattung.

Aus der US-PS 4 539 108 ist bereits ein solches Kraftstofffilter für Dieselkraftstoff bekannt, bei der in einem Filtergehäuse unterhalb eines Filterwickels ein Wasserspeicherraum angeordnet ist. Im Boden des Filtergehäuses ist in eine Gewindehülse ein Wassersensor mit einem stopfenförmigen Gehäuse eingeschraubt, wobei in diesem Sensorgehäuse ein Ventil zum Wasserentleeren integriert ist. Das Ventil hat einen von außen zugänglichen Griff, an dem es von Hand zum Wasserentleeren geöffnet werden kann. Von Nachteil bei diesem Kraftstofffilter ist, dass im eingebauten Zustand des Kraftstofffilters das von Hand zu betätigende Ventil oft schlecht zugänglich ist, zumal noch in unmittelbarer Nähe die elektrischen Kabel für den Wassersensor an das stopfenförmige Gehäuse heranführen. Zudem baut hier der Wassersensor relativ groß und aufwendig, da das Ventil zum Wasserentleeren unmittelbar in das Sensorgehäuse integriert ist. Für einen Austausch des Wassersensors ist unterhalb des Kraftstofffilters viel Bauraum erforderlich, der in vielen Anwendungsfällen, besonders im Kraftfahrzeug, nicht vorhanden ist, so dass die Einbaumöglichkeiten des Kraftstofffilters beschränkt sind.

Ferner ist aus der DE 33 25 772 A1 ein Kraftstofffilter für Dieselkraftstoff bekannt, bei dem zum leichteren Wasserentleeren der Wasserablaßstutzen am oberen Gehäusedeckel des Kraftstofffilters angeordnet ist, während die untere Verschlußschraube am Filtergehäuse ausschließlich als Wassersensor ausgeführt ist und einen elektrischen Anschluß nach außen aufweist. Hier kann zwar der Wasserablaß oben am Deckel bequem durchgeführt werden. Nachteilig ist jedoch, dass hier zum Wasserentleeren eine zusätzliche Handpumpe und ein vom Deckel in den Wasserspeicherraum führendes, flexibles Rohr im Filtergehäuse erforderlich sind, so dass der zum Wasserentleeren am Kraftstofffilter erforderliche Aufwand relativ groß ist, vor allem durch die zusätzlich erforderliche Handpumpe.

### Vorteile der Erfindung

Das erfindungsgemäße Kraftstofffilter mit den Merkmalen des Hauptanspruchs hat demgegenüber den Vorteil, dass hier die Funktion des Wasserentleerens auf einfache und bequeme Weise mechanisch durchführbar ist. Der ohnedies vorhandene Wassersensor wird dabei zum mechanischen Steuern des Wasserablauf-Ventils benutzt, wobei der Wassersensor am oberen Deckel des Filtergehäuses lösbar befestigt und daher besonders leicht zugänglich ist, während das Wasserentleeren über das mechanisch gesteuerte Ventil ohne zusätzliche Handpumpe unten am Filtergehäuse erfolgt. Dabei baut diese Entwässerungs-Vorrichtung relativ einfach und kostengünstig und läßt sich vor allem bei engen Raumverhältnissen einsetzen. Zudem ist die Entwässerungs-Vorrichtung leicht montierbar und auch leicht bedienbar. Ferner eignet sie sich für einen robusten Betrieb.

Durch die in den Unteransprüchen aufgeführten Maßnahmen sind vorteilhafte Weiterbildungen und Verbesserungen des im Hauptanspruch angegebenen Kraftstofffilters möglich. Besonders vorteilhaft sind Ausbildungen nach den Ansprüchen 2 bis 4, wodurch sich das Wasserablauf-Ventil als patronenartiger Ventileinsatz leicht und kostengünstig herstellen und auch handhaben läßt und wodurch der Ventileinsatz zusammen mit dem Filterelement günstig im Filtergehäuse montierbar ist. Bei einer Ausbildung nach Anspruch 5 ergibt sich eine einfache und kostengünstige Lösung, wenn der Ventilsitz unmittelbar am Boden des Filtergehäuses ausgebildet wird. Zweckmäßig ist ferner eine Ausbildung des Wassersensors nach Anspruch 6, wodurch sich bei einfacher Bauart eine sichere und einfache Betätigung des Wasserablauf-Ventils erreichen läßt. Weitere vorteilhafte Ausgestaltungen ergeben sich aus den übrigen Ansprüchen, der Beschreibung sowie der Zeichnung.

### Zeichnung

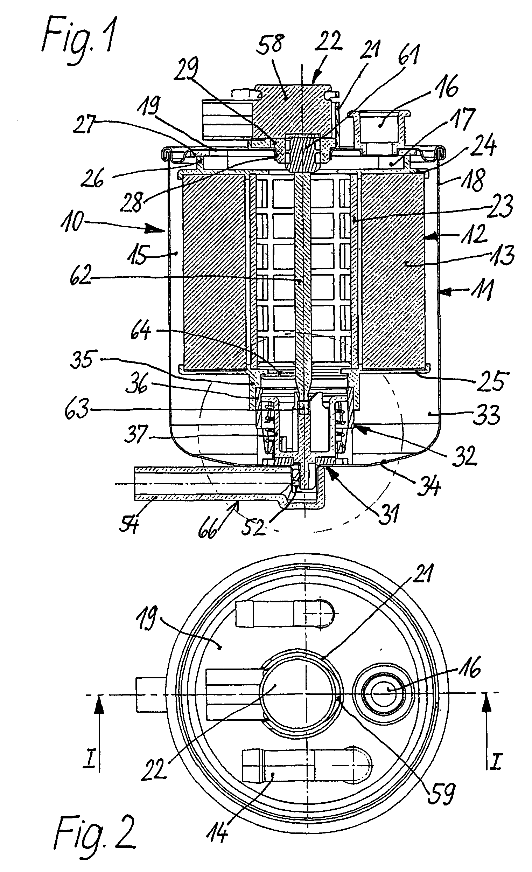

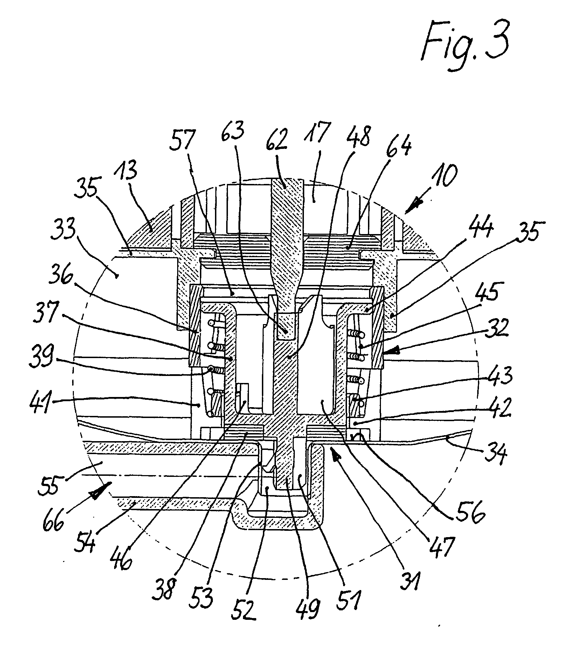

Ein Ausführungsbeispiel der Erfindung ist in der Zeichnung dargestellt und in der nachfolgenden Beschreibung näher erläutert. Es zeigen Figur 1 in stark vereinfachter Darstellung einen Längsschnitt durch ein Kraftstofffilter für Dieselkraftstoff mit der erfindungsgemäßen Entwässerungs-Vorrichtung, Figur 2 eine Draufsicht auf den Kraftstofffilter nach Figur 1 und Figur 3 als Einzelheit im vergrösserten Maßstab einen Längsschnitt durch das Wasserablauf-Ventil beim Kraftstofffilter nach Figur 1.

### Beschreibung des Ausführungsbeispiels

Die Figur 1 zeigt in stark vereinfachter Darstellung einen Längsschnitt durch ein Kraftstofffilter 10 für Dieselkraftstoff. Das Kraftstofffilter 10 hat ein Filtergehäuse 11, in dessen Inneren ein Filtereinsatz 12 angeordnet ist, der ein radial von außen nach innen durchströmtes Sternelement 13 aufweist. Der Filtereinsatz 12 ist in üblicher Weise zwischen eine mit einem Zulaufanschluß 14 verbundene Schmutzseite 15 und eine mit einem Ablaufanschluß 16 verbundene Reinseite 17 geschaltet. Wie die Figur 1 in Verbindung mit Figur 2 näher zeigt, besteht das Filtergehäuse 11 aus einem becherförmigen Gehäuseteil 18, das durch einen Deckel 19 dicht und fest verschlossen ist. An dem Deckel sind der Zulaufanschluß 14 sowie der Ablaufanschluß 16 ausgebildet, während er im Wesentlichen zentral eine Sensoraufnahme 21 aufweist, in welche der Wassersensor 22 eingebaut ist.

Wie die Figur 1 näher erkennen läßt, ist das Sternelement 13 ringförmig um ein gitterförmig ausgebildetes Mittelrohr 23 angeordnet und stirnseitig durch eine obere Endscheibe 24 und durch eine untere Endscheibe 25 abgedichtet. Die obere Endscheibe 24 weist einen Ringsteg 26 auf, mit dem sich der Filtereinsatz 12 über einen Dichtring 27 am Deckel 19 abstützt, so dass die Reinseite 17 von der Schmutzseite 15 getrennt ist. Der Ringsteg 26 und die zugeordnete Dichtung 27 haben dabei einen ovalen Verlauf, so dass der mit der Reinseite 17 verbundene Ablaufanschluß 16 von dem Zulaufanschluß 14 getrennt ist. Für den Einbau des Wassersensors 22 weist der Deckel 19 im Bereich der Reinseite 17 eine zentrale Einbauöffnung 28 auf, in die ein Formdichtring 29 eingesteckt ist.

Wie die Figur 1 in Verbindung mit Figur 3 näher zeigt, ist das Wasserablauf-Ventil 31 in Form eines patronenförmigen Ventileinsatzes 32 ausgebildet, der im Wasserspeicherraum 33 des Filtergehäuses 11 angeordnet ist und somit zwischen den Filtereinsatz 12 und den Boden 34 des becherförmigen Gehäuseteils 18 zu liegen kommt. Zu diesem Zweck weist die untere Endscheibe 25 des Filtereinsatzes 12 eine koaxial zum Mittelrohr 23 verlaufende, buchsenartige Aufnahme 35 auf, in die der Ventileinsatz 32 eingebaut ist. Über diesen Ventileinsatz 32 stützt sich somit der Filtereinsatz 12 am Boden 34 des Filtergehäuses 11 ab.

Wie die Figur 3 besonders deutlich erkennen läßt, besteht der patronenartige Ventileinsatz 32 lediglich aus vier Teilen. Dazu nimmt ein hülsenförmiges Ventilgehäuse 36 in seinem Inneren einen im Wesentlichen hutförmigen Schließkörper 37 auf, der an seinem unteren Abschnitt einen Flachdichtring 38 trägt, wobei sich zwischen Schließkörper 37 und Ventilgehäuse 36 eine Druckfeder 39 abstützt. Das Ventilgehäuse 36 und der Schließkörper 37 können relativ einfach durch Spritzgießen als Kunststoffteile hergestellt werden, wobei das zylindrische, hülsenförmige Ventilgehäuse 36 an seinem unteren, dem Boden 34 zugewandten Teil längs des Umfangs gleichmäßig verteilt eine Vielzahl von Fenster 41 aufweist, so dass ein ungehindertes Durchströmen von Wasser möglich ist. Ferner weist das hohlzylindrische Ventilgehäuse 36 nahe dem Boden 34 einen ringförmigen Führungsbund 42 auf, durch den der hutförmige Schließkörper 37 mitgeführt wird. In axialer Richtung angeformt an diesem Führungsbund 42 ist ein Haltering 43, so dass das untere Ende der Druckfeder 39 im Ventilgehäuse 36 einwandfrei geführt wird. Der hutförmige Schließkörper 37 hat an seinem oberen Ende einen Ringflansch 44, von dem in axialer Richtung mehrere gleichmäßig am Umfang verteilte Führungsrippen 45 abstehen, so dass einerseits das andere Ende der Druckfeder 39 am Schließkörper 37 einwandfrei abgestützt ist. Zudem ist der Schließkörper 37 durch den Ringflansch 44 mit seinen angeformten Führungsrippen 45 im Ventilgehäuse 36 in axialer Richtung geführt. Für den freien Durchfluß von Wasser sind im Schließkörper 37 mehrere am Umfang gleichmäßig verteilte Fenster 46 angeordnet. Im Inneren des Schließkörpers 37 sind zur Versteifung vier Rippen 47 angeordnet, die an ihrem zentralen Schnittpunkt ein axial verlaufendes Bolzenteil 48 bilden. Der Schließkörper 37 trägt auf seiner dem Boden 34 zugewandten Stirnseite den Flachdichtring 38, der hier unverlierbar am Schließkörper angeordnet ist. Ferner weist der Schließkörper 37 einen über den Flachdichtring 38 hinausragenden Führungszapfen 49 mit Nuten 51 auf, der in einer Wasserablauföffnung 52 des Filtergehäuses 11 geführt ist. Die Wasserablauföffnung 52 am Boden 34 des Filtergehäuses 11 ist durch eine hohlzylindrische Ausformung 53 zentral am Gehäuseteil 18 ausgebildet, so dass über einen radial verlaufenden Anschlußstutzen 54, der am Filtergehäuse 11 befestigt ist, ein Wasserablauf-Anschluß 55 gebildet wird. Ein die Wasserablauföffnung 42 ringförmig umgebender Bereich am Boden 34 des Filtergehäuses 11 bildet dabei einen Ventilsitz 56, auf den der Flachdichtring 38 aufsitzt und somit den Wasserspeicherraum 33 nach außen hin abdichtet. Das Ventilgehäuse 36 bildet an seinem in die buchsenförmige Aufnahme 35 gestecktem Ende einen Anschlag 57, der den Hub des Schließkörpers 37 innerhalb des Ventilgehäuses 36 begrenzt. Nach dem Einsetzen des Schließkörpers 37 mit der Druckfeder 39 in das Ventilgehäuse 36 verhindert der Anschlag 57 ein Auseinanderdrücken beider Teile, so dass der patronenförmige Ventileinsatz 32 leicht handhabbar und montierbar ist.

Wie die Figur 1 in Verbindung mit Figur 3 näher zeigt, weist der Wassersensor 22 einen Kopfteil 58 auf, mit dem er in die Sensoraufnahme 21 eingesteckt ist; in der Sensoraufnahme 21 ist das Kopfteil 58 und somit der Wassersensor 22 durch einen Federring 59 lösbar gehalten. Der Wassersensor 22 durchdringt dabei mit einem an das Kopfteil 58 anschließenden vergrösserten zylindrischen Abschnitt 61 den Formdichtring 29 und verschließt damit die Einbauöffnung 28 nach außen, so dass die Reinseite 17 abgesperrt ist. Der Wassersensor 22 hat ferner ein an den zylindrischen Abschnitt 61 anschließendes Stabteil 62, das konzentrisch zum Mittelrohr 23 den Filtereinsatz 12 durchdringt, und mit seinem unteren freien Ende 63 auf das Bolzenteil 48 drückt, so dass der Schließkörper 37 mit seinem Flachdichtring 38 die Wasserablauföffnung 52 verschließt. Das Stabteil 62 des Wassersensors 22 durchdringt dabei in abgedichteter Form eine ringförmige Trennwand 64, die im Bereich der unteren Endscheibe 35 in den Filtereinsatz 12 eingebaut ist, so dass der schmutzseitige Wasserspeicherraum 33 von der Reinseite 17 getrennt ist.

Der Wassersensor 22 ist hier stark vereinfacht nur mit seinem mechanischen Aufbau dargestellt, während seine elektrischen Bauelemente zum sensieren des Wasserspiegels nicht näher dargestellt sind. Der Schließkörper 37 mit seinem Flachdichtring 38 und dem zugehörigen Ventilsitz 56 bilden Teile des sogenannten Wasserablauf-Ventils 31. Ferner bildet dieses Wasserablauf-Ventil 31 zusammen mit dem Wassersensor 22 eine sogenannte Entwässerungs-Vorrichtung 66 für das Kraftstofffilter 10.

Die Wirkungsweise des Kraftstofffilters 10 mit der Entwässerungs-Vorrichtung 66 wird wie folgt erläutert, wobei insoweit darauf eingegangen wird, als zum Verständnis der Erfindung notwendig ist.

Im Betrieb strömt der zu reinigende Dieselkraftstoff über den Zulaufanschluß 14 in den Innenraum des Filtergehäuses 11 auf dessen Schmutzseite 15, durchströmt radial von außen nach innen den Filtereinsatz 12 und gelangt über das Mittelrohr 23 auf die Reinseite 17, von wo es über den Ablaufanschluß 16 gereinigt abströmt. Dabei abgeschiedenes Wasser sammelt sich auf der Schmutzseite 15 und sinkt in den Wasserspeicherraum 33, wobei der Wassersensor 22 in üblicher Weise ein Signal erzeugt, wenn der Wasserspiegel die nicht näher gezeigten Pole am Ende 63 erreicht. Der Wassersensor 22 ist während des Betriebs des Kraftstofffilters 10 am Deckel 19 dicht und fest befestigt, wobei ein Federring 59 den Kopfteil 58 fest in der Sensoraufnahme 21 hält. Der Wassersensor 22 ist mit seinem Stabteil 62 so lang ausgebildet, dass er in befestigtem Zustand mit seinem freien Ende 63 den Schließkörper 37 mit seinem Flachdichtring 38 fest auf den Ventilsitz 56 drückt, so dass das Wasserablauf-Ventil 31 geschlossen ist. Wenn der Kraftstofffilter 10 dabei in einem System mit Druck arbeitet, wird der im Filtergehäuse 11 herrschende Druck die Anpressung auf den Flachdichtring 38 erhöhen und somit für eine gute Abdichtung sorgen.

Soll nun nach einem Signal des Wassersensors 22 das Wasser aus dem Wasserspeicherraum 33 abgelassen werden, so kann eine Bedienungsperson in bequemer Weise am oberen Deckel 19 den Wassersensor 22 aus seiner Befestigung lösen, indem er den Federring 59 entfernt und anschließend den Wassersensor 22 aus dem Kraftstofffilter 10 herauszieht. Beim Demontieren des Wassersensors 22 wird nun das Wasserablauf-Ventil 31 entriegelt und damit geöffnet, indem die Druckfeder 39 nun den Schließkörper 37 nach oben drücken kann, bis der Ringflansch 44 am Anschlag 57 anliegt. Dabei hebt der Flachdichtring 38 vom Ventilsitz 56 ab und Wasser kann aus dem Wasserspeicherraum 38 ungehindert über die Wasserablauföffnung 52 und den Anschlußstutzen 54 zum Wasserablauf-Anschluß 55 abströmen. Bei ausgebautem Wassersensor 22 kann über die Öffnung im Formdichtring 29 ungehindert Luft von außen in das Filtergehäuse 11 einströmen, so dass der Abfluß von Wasser nicht behindert wird und keine zusätzliche Handpumpe erforderlich ist. Nach dem Ablassen des Wassers wird der Wassersensor 22 wieder montiert, wobei er bei der Montage mit seinem Stabteil 62 den Schließkörper 37 nach unten drückt und damit das Wasserablauf-Ventil 31 wieder zusteuert.

Der patronenförmig ausgebildete Ventileinsatz 32 läßt sich leicht herstellen und auch montieren. So kann beim Zusammenbau des Kraftstofffilters 10 der Ventileinsatz 32 mit seinem Ventilgehäuse 36 leicht in die buchsenförmige Aufnahme 35 eingesteckt werden, so dass anschließend der Filtereinsatz 12 mit eingestecktem Ventileinsatz 32 in das becherförmige Gehäuseteil 18 einbaubar ist, bevor das Gehäuseteil 18 mit dem Deckel 19 verschlossen wird. Bei der anschließenden Montage des Wassersensors 22 am Kraftstofffilter 10 wird dann das zuvor offene Wasserablauf-Ventil 31 mechanisch zugesteuert, wobei diese Betätigung in bequemer Weise von außen von der Deckelseite des Flüssigkeitsfilters 10 her erfolgen kann.

Selbstverständlich sind an der gezeigten Ausführungsform Änderungen möglich, ohne vom Gedanken der Erfindung abzuweichen. So kann die Befestigung des Wassersensors im Deckel anstelle mit dem aufgezeigten Federring auch mit Hilfe einer Gewindebefestigung erfolgen. Wenn das Kraftstofffilter 10 in einem Saugbetrieb arbeiten soll, kann es auch zweckmäßig sein, das Wasserablauf-Ventil so auszubilden, dass es an Stelle mit dem gezeigten Flachdichtring 38 mit O-Ringen arbeitet, um eine bessere Dichtwirkung zu erreichen.

## Patentansprüche

1. Kraftstofffilter, (10) insbesondere für Dieselkraftstoff, mit einem Filtergehäuse, (11) das einen Zulaufanschluß (14) und einen Ablaufanschluß (16) aufweist und in seinem Innenraum einen Filtereinsatz (12) aufnimmt, der in einer Schmutz- und Reinseite (15, 17) voneinander trennenden Weise zwischen die beiden Anschlüsse geschaltet ist und mit einem im unteren Teil des Filtergehäuses (11) ausgebildeten Wasserspeicherraum, (33) in den ein Wassersensor (22) ragt und aus dem Wasser durch ein von außen mechanisch betätigbares Ventil (32) über einen Wasserablauf-Anschluß (54) nach außen entleerbar ist und dem eine Wasserablauföffnung (52) im Boden des Filtergehäuses zugeordnet ist, **dadurch gekennzeichnet, dass** das Wasserablauf-Ventil (31) im Wasserspeicherraum (33) zwischen Filtereinsatz (12) und Wasserablauf-Anschluß (55) angeordnet ist, und dass der Wassersensor (22) im Gehäusedeckel (19) lösbar befestigt und so ausgebildet ist, dass mit ihm das Wasserablauf-Ventil (31) in eine Offen- oder Geschlossen-Stellung steuerbar ist.

2. Kraftstofffilter nach Anspruch 1, **dadurch gekennzeichnet, dass** das Wasserablauf-Ventil (31) einen Ventileinsatz (32) aufweist, der in einem hülsenförmigen Ventilgehäuse (36) einen axial beweglich gelagerten Schließkörper (37) aufweist, der eine Wasserablauföffnung (52) im Boden (34) des Filtergehäuses (11) steuert und der von einer Feder (39) in einer die Wasserablauföffnung (52) aufsteuernden Richtung belastet ist.

3. Kraftstofffilter nach Anspruch 2, **dadurch gekennzeichnet, dass** sich das hülsenförmige Ventilgehäuse (36) zwischen dem Filtereinsatz (12) und dem Boden (34) des Filtergehäuses (11) abstützt.

4. Kraftstofffilter nach Anspruch 2 oder 3, **dadurch gekennzeichnet, dass** der Filtereinsatz (12) an seiner unteren Endscheibe (25) eine insbesondere koaxial angeordnete, buchsenförmige Aufnahme (35) aufweist, in die das Ventilgehäuse (36)einbaubar, insbesondere einsteckbar ist.

5. Kraftstofffilter nach einem der Ansprüche 1 bis 4, **dadurch gekennzeichnet, dass** die Absperrfunktion des Ventils (31) von einem am Schließkörper (37) angeordneten Flachdichtring (38) und von einem diesem zugeordneten, ebenen Ventilsitz (56) übernommen wird, der am Boden (34) des Filtergehäuses (11) angeordnet ist.

6. Kraftstofffilter nach einem der Ansprüche 1 bis 5, **dadurch gekennzeichnet, dass** der Wassersensor (22) einen Kopfteil (58) aufweist, mit dem er am Deckel (19) des Filtergehäuses (11) lösbar befestigt ist und dass er mit einem vom Kopfteil (58) ausgehenden Stabteil (62) den Deckel (19) und den Filtereinsatz (12) durchdringt und mit seinem freien Ende (63) mit dem Schließkörper (37) in Wirkverbindung steht.

7. Kraftstofffilter nach Anspruch 6, **dadurch gekennzeichnet, dass** das Stabteil (62) des Wassersensors (22) koaxial zum Schließkörper (37) und insbesondere zum Filtereinsatz (12) angeordnet ist.

8. Kraftstofffilter nach einem der Ansprüche 1 bis 7, **dadurch gekennzeichnet, dass** der Filtereinsatz (12) insbesondere im Bereich der unteren Endscheibe (25), im Mittelrohr (23) eine Trennwand (64) aufweist, welche den Wasserspeicherraum (33) von der Reinseite (17) trennt und durch die der Wassersensor (22) mit seinem Stabteil (62) in abgedichteter Weise hindurchgeführt ist.

9. Kraftstofffilter nach einem der Ansprüche 1 bis 8, **dadurch gekennzeichnet, dass** der Filtereinsatz (12) ein radial von außen nach innen durchströmtes Sternelement (13) ist, das zwischen stirnseitigen Endscheiben (24, 25) ringförmig um ein Mittelrohr (23) angeordnet ist.

10. Kraftstofffilter nach einem der Ansprüche 2 bis 9, **dadurch gekennzeichnet, dass** der Wassersensor (22) und der Ventileinsatz (32) zentral im Filtergehäuse (11) angeordnet sind.

## Claims

1. Fuel filter (10), in particular for diesel fuel, having a filter housing (11), which includes an inlet connection (14) and an outlet connection (16) and in its interior accommodates a filter insert (12), which is fitted between the two connections in such a way as to separate a dirty side (15) and clean side (17) from one another, and having a water storage space (33) which is formed in the lower part of the filter housing (11), has a water sensor (22) projecting into it, from which water can be emptied out via a water outlet connection (54) through a valve (32) that can be mechanically actuated from the outside, and which is assigned a water outlet opening (52) in the base of the filter housing, **characterized in that** the water outlet valve (31) is arranged in the water storage space (33) between filter insert (12) and water outlet connection (55), and **in that** the water sensor (22) is releasably secured in the housing cover (19) and formed in such a way that it can be used to control the water outlet valve (31) such that it adopts an open or closed position.

2. Fuel filter according to Claim 1, **characterized in that** the water outlet valve (31) has a valve insert (32), which has an axially movably mounted closure body (37) in a sleeve-like valve housing (36), which closure body controls a water outlet opening (52) in the base (34) of the filter housing (11) and is subject to load from a spring (39) in a direction which opens the water outlet opening (52).

3. Fuel filter according to Claim 2, **characterized in that** the sleeve-like valve housing (36) is supported between the filter insert (12) and the base (34) of the filter housing (11).

4. Fuel filter according to Claim 2 or 3, **characterized in that** the filter insert (12), at its lower end disc (25), has an in particular coaxially arranged, bush-like receiving part (35), into which the valve housing (36) can be installed, in particular plug-connected.

5. Fuel filter according to one of Claims 1 to 4, **characterized in that** the shut-off function of the valve (31) is performed by a flat sealing ring (38) arranged on the closure body (37) and by a planar valve seat (56), which is assigned to the flat sealing ring and is arranged on the base (34) of the filter housing (11).

6. Fuel filter according to one of Claims 1 to 5, **characterized in that** the water sensor (22) has a head part (58), by means of which it is releasably secured to the cover (19) of the filter housing (11), and **in that** it penetrates through the cover (19) and the filter insert (12) by means of a rod part (62), which starts from the head part (58) and has its free end (63) operatively connected to the closure body (37).

7. Fuel filter according to Claim 6, **characterized in that** the rod part (62) of the water sensor (22) is arranged coaxially with respect to the closure body (37), and in particular with respect to the filter insert (12).

8. Fuel filter according to one of Claims 1 to 7, **characterized in that** the filter insert (12), in particular in the region of the lower end disc (25), in the centre tube (23) has a partition (64), which separates the water storage space (33) from the clean side (17) and through which the rod part (62) of the water sensor (22) passes in a sealed way.

9. Fuel filter according to one of Claims 1 to 8, **characterized in that** the filter insert (12) is a star element (13), through which medium flows radially from the outside inwards and which is arranged in the shape of a ring around a centre tube (23) between end-side end discs (24, 25).

10. Fuel filter according to one of Claims 2 to 9, **characterized in that** the water sensor (22) and the valve insert (32) are arranged centrally in the filter housing (11).

## Revendications

1. Filtre à carburant (10), notamment pour du carburant diesel, comprenant un boîtier de filtre (11) qui présente un raccord d'admission (14) et un raccord d'écoulement (16) et loge à l'intérieur un élément filtrant (12) monté entre les deux raccords de façon à séparer l'un de l'autre un côté pollué et un côté propre (15, 17), et une chambre d'accumulation d'eau (33) formée dans une partie inférieure du boîtier de filtre (11) dans laquelle saille un capteur d'eau (22) et de laquelle de l'eau peut être vidée vers l'extérieur par une soupape (32) actionnable mécaniquement de l'extérieur par un raccord d'écoulement d'eau (54) et à laquelle est associée une ouverture d'écoulement d'eau (52) dans le fond du boîtier de filtre,
**caractérisé en ce que**
la soupape d'écoulement d'eau (31) dans la chambre d'accumulation d'eau (33) est disposée entre l'élément filtrant (12) et le raccord d'écoulement d'eau (55), et le capteur d'eau (22) est fixé amovible dans le couvercle de boîtier (19) et formé de manière à pouvoir commander la soupape d'écoulement d'eau (31) dans une position ouverte ou fermée.

2. Filtre à carburant selon la revendication 1,
**caractérisé en ce que**
la soupape d'écoulement d'eau (31) présente un insert de soupape (32) qui dans un boîtier de soupape (36) en forme de manchon présente un corps de fermeture (37) logé en déplacement axial, qui commande une ouverture d'écoulement d'eau (52) dans le fond (34) du boîtier de filtre (11) et est sollicité par un ressort (39) dans une direction commandant l'ouverture d'écoulement d'eau (52).

3. Filtre à carburant selon la revendication 2,
**caractérisé en ce que**
le boîtier de soupape (36) en forme de manchon s'appuie entre l'élément filtrant (12) et le fond (34) du boîtier de filtre (11).

4. Filtre à carburant selon la revendication 2 ou 3,
**caractérisé en ce que**
l'élément filtrant (12), au niveau de sa plaque terminale inférieure (25), présente un logement (35) en forme de douille disposé en particulier coaxialement, dans lequel le boîtier de soupape (36) peut être installé, notamment emboîté.

5. Filtre à carburant selon l'une quelconque des revendications 1 à 4,
**caractérisé en ce que**
la fonction d'arrêt de la soupape (31) est assurée par une bague d'étanchéité plate (38) disposée sur le corps de fermeture (37) et par un siège de soupape plan (56) associé à celle-ci et disposé au fond (34) du boîtier de filtre (11).

6. Filtre à carburant selon l'une quelconque des revendications 1 à 5,
**caractérisé en ce que**
le capteur d'eau (22) présente une partie de tête (58) par laquelle il est fixé de façon amovible au couvercle (19) du boîtier de filtre (11), et il traverse le couvercle (19) et l'élément filtrant (12) par une partie de tige (62) partant de la partie de tête (58), , et est en liaison active avec le corps de fermeture (37) par son extrémité libre (63).

7. Filtre à carburant selon la revendication 6,
**caractérisé en ce que**
la partie de tige (62) du capteur d'eau (22) est disposée coaxialement au corps de fermeture (37) et notamment à l'élément filtrant (12).

8. Filtre à carburant selon l'une quelconque des revendications 1 à 7,
**caractérisé en ce que**
l'élément filtrant (12), notamment dans la zone de la plaque terminale inférieure (25), présente dans le tube central (23) une cloison (64) qui sépare la chambre d'accumulation d'eau (33) du côté propre (17) et qui est traversée de façon étanche par la partie de tige (62)du capteur d'eau (22).

9. Filtre à carburant selon l'une quelconque des revendications 1 à 8,
**caractérisé en ce que**
l'élément filtrant (12) est un élément étoilé (13) traversé radialement de l'extérieur vers l'intérieur et disposé en forme d'anneau autour d'un tube central (23) entre des plaques terminales (24, 25) côté frontal.

10. Filtre à carburant selon l'une quelconque des revendications 2 à 9,
**caractérisé en ce que**
le capteur d'eau (22) et l'insert de soupape (32) sont disposés au centre du boîtier de filtre (11).
